# EUROPEAN PATENT APPLICATION

(11) **EP 4 654 026 A1**
(43) Date of publication of application: **26.11.2025**
(21) Application number: 24752832.6
(22) Date of filing: 04.02.2024
(51) Int. Cl.: G06F 12/0806, G06F 12/0897

(54) **DATA PROCESSING METHOD AND APPARATUS, AND CHIP AND COMPUTER DEVICE**

(30) Priority: 06.02.2023 CN 202310125480
(71) Applicant: Huawei Technologies Co., Ltd., Shenzhen, Guangdong 518129 (CN)
(72) Inventor: PAN, Wei, Shenzhen, Guangdong 518129 (CN); LI, Tao, Shenzhen, Guangdong 518129 (CN); ZHOU, Luoqing, Shenzhen, Guangdong 518129 (CN)
(74) Representative: Goddar, Heinz J.
(86) International application number: PCT/CN2024/075792
(87) International publication number: WO 2024/164977

(57) **Abstract**

A data processing method, an apparatus, a chip, and a computer device are disclosed, and relate to the field of computers. The method includes: based on a state of a cache line in a memory changing from a non-modified state to a modified state, starting a timer of the cache line; and writing the cache line back to a next-level memory when the timer of the cache line expires. In this way, because the cache line in the modified state is monitored based on the timer of the cache line, the cache line does not remain in the modified state for a long time. When the timer of the cache line expires, the cache line is written back to the next-level memory, and data of the cache line is backed up. This effectively alleviates a risk, of data failure of the cache line in the modified state, caused by bitflip, so that reliability of the cache line in the modified state is improved.

## Description

This application claims priority to Chinese Patent Application No. 202310125480.3, filed with the China National Intellectual Property Administration on February 6, 2023 and entitled "DATA PROCESSING METHOD, APPARATUS, CHIP, AND COMPUTER DEVICE", which is incorporated herein by reference in its entirety.

### TECHNICAL FIELD

This application relates to the field of computers, and in particular, to a data processing method, an apparatus, a chip, and a computer device.

### BACKGROUND

Currently, when performing a modification operation on a cache line, a processor first stores the cache line (cache line) in a next-level memory according to a write-back (write back) policy, and writes the cache line back to a prime memory when a write-back event is satisfied. A state of the cache line is set based on a cache coherence protocol, to ensure coherence of a plurality of cache lines associated with a same physical address of the prime memory. However, if the cache line in the memory is in a modified (modified) state for an excessively long time, a probability of bitflip (bitflip) for a hardware reason of the memory increases, which may cause an error in data of the cache line in the memory, and reduce reliability of the cache line. Therefore, how to improve reliability of the cache line in the modified state is a problem to be urgently resolved.

### SUMMARY

This application provides a data processing method, an apparatus, a chip, and a computer device, to improve reliability of a cache line in a modified state.

According to a first aspect, a data processing method is provided, and is applied to a memory (for example, a cache) in a computer device. The method includes: based on a state of a cache line in the memory changing from a non-modified state to a modified state, starting a timer of the cache line; and writing the cache line back to a next-level memory when the timer of the cache line expires.

In this way, because the cache line in the modified state is monitored based on the timer of the cache line, the cache line does not remain in the modified state for a long time. When the timer of the cache line expires, the cache line is written back to the next-level memory, and data of the cache line is backed up. This effectively alleviates a risk, of data failure of the cache line in the modified state, caused by bitflip, so that reliability of the cache line in the modified state is improved, in other words, reliability of data of the cache line in the modified state is improved.

The next-level memory may include a cache (cache for short) and a main memory. For example, the cache may be a level-1 cache and a level-2 cache that are located inside a processor core, and a level-3 cache that is located outside the processor core.

With reference to the first aspect, in a possible implementation, after starting the timer of the cache line, the method further includes: when the timer of the cache line does not expire, writing the cache line back to the next-level memory based on a write-back event.

In this way, during monitoring of the cache line in the modified state based on the timer of the cache line, the cache line is actively written back to the next-level memory based on the write-back event, to further shorten duration in which the cache line remains in the modified state. This effectively alleviates the risk, of data failure of the cache line in the modified state, caused by the bitflip, so that the reliability of the cache line in the modified state is improved.

The write-back event indicates to change the state of the cache line from the modified state to the non-modified state.

For example, the write-back event includes an eviction operation on the cache line. The eviction operation indicates to evict the data of the cache line to the next-level memory, and the state of the cache line changes from the modified state to an invalid state.

For another example, the write-back event includes a modification operation of the cache line. When the timer of the cache line does not expire, the modification operation is performed on the cache line, and the state of the cache line changes from the modified state to a shared state. Because a plurality of copies of the data of the cache line are backed up in a system, this avoids a phenomenon that the data is unavailable because the bitflip occurs when the memory stores only one piece of the data of the cache line. In this way, the cache line in the memory does not remain in the modified state for a long time, and the reliability of the cache line in the modified state is improved.

With reference to the first aspect, in another possible implementation, after writing the cache line back to the next-level memory, the method further includes: changing the state of the cache line from the modified state to the non-modified state, and initializing the timer of the cache line.

In this way, because the next-level memory also backs up the data of the cache line, that is, two copies of the data of the cache line are stored in the system, this avoids the phenomenon that the data is unavailable because the bit flip occurs when the memory stores the only one piece of the data of the cache line. The timer of the cache line is initialized, so that the cache line in the modified state is monitored in time when the state of the cache line changes to the modified state again. This avoids a case in which the cache line in the memory remains in the modified state for a long time, and improves the reliability of the cache line in the modified state.

With reference to the first aspect, in another possible implementation, based on the state of the cache line in the memory changing from the non-modified state to the modified state, starting the timer of the cache line includes: performing a modification operation on the cache line, where the state of the cache line changes from the non-modified state to the modified state, and starting the timer of the cache line. Because only the one copy of the data of the cache line is backed up in the memory, the timer of the cache line is started in time, to monitor the cache line in the modified state. This avoids the case in which the cache line remains in the modified state for a long time, and improves the reliability of the cache line in the modified state.

With reference to the first aspect, in another possible implementation, an entry of the cache line includes a tag, data, and an attribute, the tag includes a physical address of the data of the cache line, and the attribute includes a count value of the timer of the cache line.

In this way, the count value of the timer is set in the attribute, to obtain the count value of the timer, and the duration in which the cache line is in the modified state is determined based on the count value of the timer.

A storage position of the count value of the timer is not limited in this application. Optionally, count values of timers of a plurality of cache lines are centrally stored in the memory.

With reference to the first aspect, in another possible implementation, the memory is configured to store timing units of the timers of the plurality of cache lines, and the timing unit indicates a periodicity of updating the count value of the timer of the cache line.

In this way, the count value of the timer of the cache line is periodically updated based on the timing unit, so that the cache line in the modified state is accurately monitored, so that the cache line is written back to the next-level memory when the timer of the cache line expires. This effectively alleviates the risk, of data failure of the cache line in the modified state, caused by the bitflip, so that the reliability of the cache line in the modified state is improved.

The timing unit is pre-configured. For example, the timing unit includes a clock determined by a clock frequency of the memory. In this way, frequent updating of the count value of the timer of the cache line is avoided, and a system computing resource is saved.

According to a second aspect, a data storage apparatus is provided, and the apparatus includes modules configured to perform the method in the first aspect or any one of possible designs of the first aspect. For example, the data storage apparatus includes a memory and a control module.

The memory is configured to store a cache line.

The control module is configured to: start, based on a state of the cache line in the memory changing from a non-modified state to a modified state, a timer of the cache line; and write the cache line back to a next-level memory when the timer of the cache line expires.

With reference to the second aspect, in a possible implementation, the control module is further configured to: when the timer of the cache line does not expire, write the cache line back to the next-level memory based on a write-back event.

With reference to the second aspect, in another possible implementation, the write-back event includes an eviction operation on the cache line.

With reference to the second aspect, in another possible implementation, the control module is further configured to: change the state of the cache line from the modified state to the non-modified state, and initialize the timer of the cache line.

With reference to the second aspect, in another possible implementation, starting the timer of the cache line based on the state of the cache line in the memory changing from the non-modified state to the modified state, the control module is specifically configured to: perform a modification operation on the cache line, where the state of the cache line changes from the non-modified state to the modified state, and start the timer of the cache line.

With reference to the second aspect, in another possible implementation, an entry of the cache line includes a tag, data, and an attribute, the tag includes a physical address of the data, and the attribute includes a count value of the timer of the cache line.

With reference to the second aspect, in another possible implementation, the memory is configured to store timing units of timers of a plurality of cache lines in the memory, and the timing unit indicates a periodicity of updating the count value of the timer of the cache line.

According to a third aspect, a memory is provided, where the memory includes a management unit and a storage unit, the storage unit includes a plurality of cache lines, and the management unit is configured to perform an operation step of the method in the first aspect or any one of possible implementations of the first aspect.

According to a fourth aspect, a chip is provided, and includes a processor and a power supply circuit, where the power supply circuit is configured to supply power to the processor; and the processor is configured to perform an operation step of the method in the first aspect or any one of possible implementations of the first aspect.

According to a fifth aspect, a computer device is provided, where the computer device includes at least one processor and a multi-level memory. When the memory executes a group of computer instructions, an operation step of the method in the first aspect or any one of possible implementations of the first aspect is performed.

According to a sixth aspect, a computer-readable storage medium is provided, and includes computer software instructions. When the computer software instructions are run on a computer device, the computer device is caused to perform an operation step of the method in the first aspect or any one of possible implementations of the first aspect.

According to a seventh aspect, a computer program product is provided. When the computer program product runs on a computer, a computer device is caused to perform an operation step of the method in the first aspect or any one of possible implementations of the first aspect.

For technical effects brought by any one of design manners in the second aspect to the seventh aspect, refer to technical effects brought by the first aspect or different design manners in the first aspect. Details are not described herein again.

In this application, based on implementations provided in the foregoing aspects, the implementations may be further combined to provide more implementations.

### BRIEF DESCRIPTION OF DRAWINGS

FIG. 1 is a diagram of composition of a computer device according to this application;
FIG. 2 is a diagram of state transition of a cache line according to this application;
FIG. 3 is a diagram of state transition of a cache line according to this application;
FIG. 4 is a schematic flowchart of a data processing method according to this application;
FIG. 5 is a diagram of an entry of a cache line according to this application;
FIG. 6 is a diagram of timer-triggered write-back of a cache line to a next-level memory according to this application;
FIG. 7 is a diagram of eviction-triggered write-back of a cache line to a next-level memory according to this application;
FIG. 8 is a diagram of an example of timer-triggered write-back of a cache line to a next-level memory according to this application;
FIG. 9 is a diagram of a structure of a data storage apparatus according to this application; and
FIG. 10 is a diagram of a structure of a processor according to this application.

### DESCRIPTION OF EMBODIMENTS

For ease of description, terms in this application are first briefly described.

In a hierarchical structure of a computer storage system, a closer memory to a central processing unit (central processing unit, CPU) indicates a faster access speed and a smaller storage capacity. Memories are classified into a register, a cache, a main memory, and a magnetic disk in an ascending order of distances to the CPU.

**A main memory (main memory)** is also referred to as an internal memory, which is referred to as a prime memory or a memory (memory) for short. The prime memory is an important component of a computer system, namely, a bridge for communication between an external memory and a central processing unit (central processing unit, CPU). The prime memory is configured to temporarily store computing data in the CPU and data exchanged between the CPU and the external memory, for example, a hard disk. For example, a computer starts to run, and loads data that needs to be computed from the prime memory to the CPU for computation. After the computation is completed, the CPU stores a computation result in the prime memory. For example, the prime memory includes a dynamic random access memory (dynamic random access memory, DRAM) and a double data rate synchronous dynamic random access memory (double data rate synchronous DRAM, DDR SDRAM).

**An external memory** is also referred to as a secondary memory, which is referred to as an external storage or an auxiliary storage for short. Compared with a prime memory, the external storage has a large storage capacity and a slow access speed. For example, the external memory includes a network memory, a solid state drive (solid state disk or solid state drive, SSD), and a hard disk drive (hard disk drive, HDD).

**A cache (cache)** is a high-speed and small-capacity memory between a CPU and a prime memory. The cache is referred to as a cache for short. Compared with the prime memory, the cache has a small storage capacity and a fast access speed. The cache includes a level-1 cache (L1 cache), a level-2 cache (L2 cache), and a level-3 cache (L3 cache). The level-1 cache is arranged inside a processor core. The level-2 cache may be arranged inside or outside the processor core. The level-1 cache and the level-2 cache are usually exclusive (exclusive) to the processor core in which the level-1 cache and the level-2 cache are located. The level-3 cache is generally arranged outside the processor core, and is shared (shared) by a plurality of processor cores.

**A cache line (cache line)** is a unit in which a computer device performs a read operation or a write operation on storage space of a memory. For example, a cache line size may be 64 bytes (byte, B).

**A memory block (memory block)** has a same size as a cache line, and is a minimum unit for data exchange between a cache and a prime memory. The size of the memory block is limited by a length of data that can be accessed in a clock cycle of the prime memory.

**Writing back (write back)** means that when performing a write operation on a prime memory, a CPU temporarily writes data of a cache line to a cache, sets a state of the data in the cache, and writes the data of the cache line in the cache to the prime memory when a write-back event is satisfied.

**Cache coherence (cache coherence)** is also referred to as cache coherence or inter-cache coherence. The cache coherence is a mechanism, in a computer system that uses a storage system of a hierarchical structure, for maintaining cache coherence between a plurality of caches and between a cache and a prime memory.

**A cache coherence problem** means that when caches of two processor cores store a same memory block in a prime memory, if a memory block in a cache of only one processor core is modified and is not written back to the prime memory, and the other processor core still stores the memory block in the prime memory, this causes incoherence between memory blocks stored in the caches of the two processor cores and the memory block stored in the prime memory, and causes data incoherence when the two processor cores read respective caches of the two processor cores. It may be understood that, cache lines in the caches of the two processor cores are associated with a same physical address of the prime memory. When data of only one cache line is modified and modified data is not written back to the main memory, and data of the other cache line is not modified, data of the two cache lines and data in the main memory are incoherent.

**A cache coherence protocol (cache coherence protocol)** provides a plurality of states of a cache line, to resolve a cache coherence problem. The plurality of states may include a modified state and a non-modified state. The non-modified state may include an exclusive state, a shared state, an invalid state, a forwarding state, and a special modified state (prime state). For example, four states of the cache line are shown in Table 1.

**Table 1**

| State | Description |
|---|---|
| Modified state M (modified) | A cache line is valid, data of the cache line is modified and is incoherent with data in a main memory, and the data of the cache line in the modified state is stored in only one cache. |
| Exclusive state E (exclusive) | A cache line is valid, data of the cache line is coherent with data in a main memory, and the data of the cache line in the exclusive state is stored in only one cache. |
| Shared state S (shared) | A cache line is valid, data of the cache line is coherent with data in a main memory, and the data of the cache line in the shared state is stored in a plurality of caches. |
| Invalid state I (invalid) | A cache line is invalid. |

**Bitflip (bitflip)** means that one or more bit values stored in a cache change for a hardware reason of the cache. For example, a bit value 0 changes to a bit value 1, or a bit value 1 changes to a bit value 0. For example, the hardware cause includes the following several types: (1) There is a quality defect of the cache. (2) Power supply of the cache is insufficient or power supply is interfered. (3) Data is interfered during transmission between caches or prime memories. (4) Pins between the cache and hardware of a main board are poorly soldered. (5) Voltage or a signal sent to the cache is unstable due to damage or minor damage of a main board.

To resolve a low reliability, of a cache line in a modified state in a cache, caused by bitflip, this application provides a data processing method. To be specific, when a state of the cache line in the cache changes from a non-modified state to a modified state, a timer of the cache line is started; and when the timer of the cache line expires, the cache line is written back to a next-level memory. Because the cache line in the modified state is monitored based on a timing mechanism, the cache line in the cache does not remain in the modified state for a long time. When the timer of the cache line expires, the cache line is written back to the next-level memory, and data of the cache line is backed up. This effectively alleviates a risk, of data failure of the cache line in the modified state, caused by the bitflip, so that the reliability of the cache line in the modified state is improved.

The following describes in detail implementations of this application with reference to accompanying drawings.

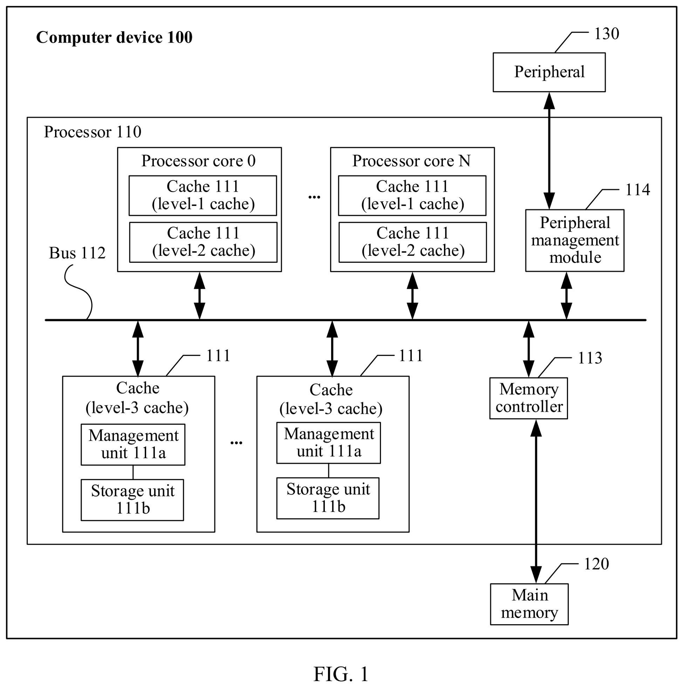

FIG. 1 is a diagram of composition of a computer device according to this application. As shown in FIG. 1, the computer device 100 includes a processor 110, a main memory 120, and a cache 111.

The processor 110 is a control center of the computer device 100. Usually, the processor 110 is a central processing unit (central processing unit, CPU), and includes one processor core (core) or a plurality of processor cores. For example, the processor 110 shown in FIG. 1 includes N processor cores.

The cache 111 is configured to store instructions or data that may be accessed by the processor core in the processor 110 a plurality of times. In this way, a data processing speed of the processor is increased, and this avoids frequent access of the main memory 120 by the processor.

In a physical form, the cache 111 may be a random access memory (random access memory, RAM), a static random access memory (static random access memory, SRAM), a dynamic random access memory (dynamic RAM, DRAM), or another type of storage device that can store information and instructions.

In a logical form, the cache 111 may be a level-1 cache (L1 cache), a level-2 cache (L2 cache), a level-3 cache (L3 cache), or a cache device of any level. For example, as shown in FIG. 1, caches 111 arranged inside a processor core may be a level-1 cache (L1 cache) and a level-2 cache (L2 cache). A cache 111 arranged outside the processor core may be a level-3 cache (L3 cache).

As shown in FIG. 1, the cache 111 includes a management unit (cache unit) 111a, and the management unit 111a is connected to a storage unit (slice) 111b. A cache line is a minimum cache unit in the storage unit 111b. A cache line size (cache line size) may be 32 bytes (byte, B), 64 bytes, 128 bytes, 256 bytes, or the like. Assuming that a storage capacity of the storage unit 111b is 512 bytes and the cache line size is 64 bytes, a storage capacity of the storage unit 111b is divided into 8 cache lines.

Based on a cache coherence protocol, the management unit 111a not only snoops (snoop) a modification operation of a cache line in the cache 111 to which the management unit 111a belongs, but also snoops (snoop) a modification operation of a cache line in another cache 111 in the processor 110, so that a state of the cache line in the cache 111 is transitioned between a plurality of states, to maintain data coherence between a plurality of caches 111 and between the cache 111 and the main memory 120.

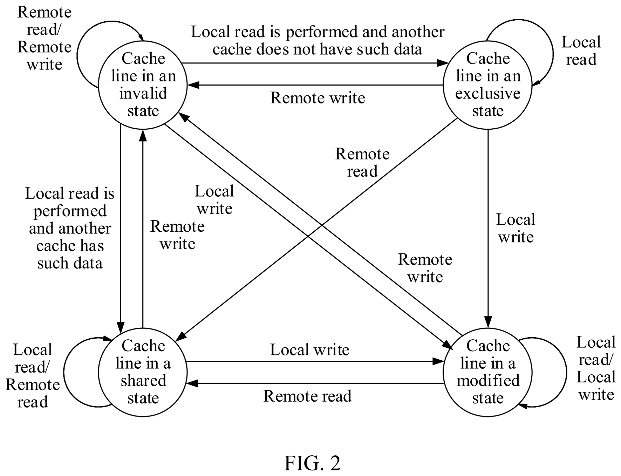

FIG. 2 is a diagram of state transition of a cache line according to this application. As shown in FIG. 2, when a state of the cache line is any one of an exclusive state, a shared state, and an invalid state, after a local write operation is performed on the cache line, because data of the cache line is modified, the state of the cache line may change from any one of the exclusive state, the shared state, and the invalid state to a modified state. Therefore, the data of the cache line in the modified state is stored only in a cache to which the cache line belongs. In this case, data that is of the cache line before modification and that is stored in another cache becomes invalid.

When the state of the cache line is the modified state, after a local write operation is performed on the cache line, the state of the cache line may change from the modified state to a modified state; after a remote write operation is performed on the cache line, the state of the cache line may change from the modified state to the invalid state; or after a remote read operation is performed on the cache line, the state of the cache line may change from the modified state to the shared state.

When the state of the cache line is the exclusive state, after a remote read operation is performed on the cache line, data of another cache line is the same as data of the cache line, and the state of the cache line may change from the exclusive state to the shared state; or after a remote write operation is performed on the cache line, data of another cache line is different from data of the cache line, and the state of the cache line may change from the exclusive state to the invalid state.

When the state of the cache line is the invalid state, after a local read operation is performed on the cache line, if data of another cache line is the same as data of the cache line, the state of the cache line may change from the invalid state to the shared state; or if data of another cache line is different from data of the cache line, the state of the cache line may change from the invalid state to the exclusive state.

When the state of the cache line is the shared state, after a remote write operation is performed on the cache line, the state of the cache line may change from the shared state to the invalid state.

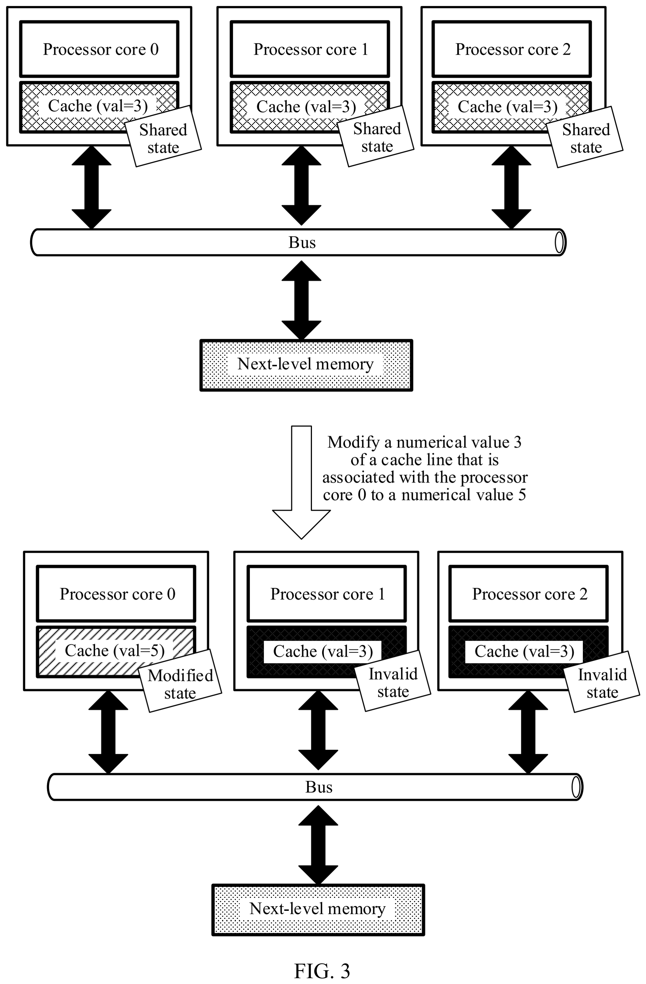

For example, as shown in FIG. 3, a processor core 0, a processor core 1, and a processor core 2 all store a numerical value (numerical value) 3. Cache lines of the three processor cores are all in the shared state. The processor core 0 modifies the numerical value 3 of a cache line to a numerical value 5, and a state of the cache line of the processor core 0 changes from the shared state to the modified state. Because the numerical value 5 is stored only in the cache line of the processor core 0, states of cache lines of the processor core 1 and the processor core 2 both change from the shared state to the invalid state.

In this application, the management unit 111a is further configured to perform timing on the cache line in the modified state. To be specific, the management unit 111a performs a modification operation on the cache line based on a write instruction of the processor 110, that is, modifies the data of the cache line. In this case, the data is stored in only one cache 111. In this case, the state of the cache line changes from a non-modified state to the modified state, and a timer of the cache line is started. When the timer of the cache line expires, the data of the cache line is written back to a next-level memory. The next-level memory may include a cache and a prime memory. For example, the cache may be a level-1 cache and a level-2 cache that are located inside a processor core, and a level-3 cache that is located outside the processor core.

The processor core is connected to the cache 111 through a bus 112, and accesses the cache 111 through the bus 112. For example, the processor core transmits a write instruction or a read instruction to the cache 111 through the bus 112, so that the management unit 111a in the cache 111 performs a write operation on the cache line based on the write instruction or performs a read operation on the cache line based on the read instruction. The bus 112 may be an industry standard architecture (industry standard architecture, ISA) bus, a peripheral component interconnect (peripheral component, PCI) bus, an extended industry standard architecture (extended industry standard architecture, EISA) bus, a private bus standard of a non-standard architecture, or the like. The bus may be divided into an address bus, a data bus, a control bus, and the like. For ease of representation, only one thick line is used for representation in FIG. 1, but this does not mean that there is only one bus or one type of bus.

A connection manner of the processor core and the cache 111 in FIG. 1 is merely an example description. In a possible implementation, the processor core is connected to the cache 111 through a ring bus (ring bus), and accesses the cache 111 through the ring bus. In another possible implementation, the processor core is connected to the cache 111 through a mesh bus (mesh bus), and accesses the cache 111 through the mesh bus.

The processor 110 is connected to the main memory 120 via a memory controller (memory controller, MC) 113. The processor 110 may perform various functions of the computer device 100 by running or executing a software program stored in the main memory 120, and invoking data stored in the main memory 120. For example, the processor 110 writes the data of the cache line back to the main memory 120 via the memory controller (memory controller, MC) 113.

The main memory 120 may be a read-only memory (read-only memory, ROM), another type of static storage device that can store static information and instructions, a random access memory (random access memory, RAM), another type of dynamic storage device that can store information and instructions, an electrically erasable programmable read-only memory (electrically erasable programmable read-only memory, EEPROM), or the like. The main memory 120 is further configured to store a program related to this embodiment.

The processor 110 may further include a peripheral (external device) 130 and a peripheral management module 114. The peripheral 130 is connected to the peripheral management module 114 through the bus 112. The peripheral 130 may be an application-specific integrated circuit (application-specific integrated circuit, ASIC), for example, a microprocessor (digital signal processor, DSP), one or more field programmable gate arrays (field programmable gate array, FPGA), a graphics processing unit (graphics processing unit, GPU), or a neural network processing unit (neural network processing unit, NPU). The peripheral 130 may alternatively transmit the write instruction or the read instruction to the cache 111 through the bus 112, so that the management unit 111a in the cache 111 performs the write operation on the cache line based on the write instruction or performs the read operation on the cache line based on the read instruction.

A structure of the device shown in FIG. 1 does not constitute a limitation on the computer device. The computer device may include more or fewer components than those shown in the figure, or may combine some components, or may have different component arrangement.

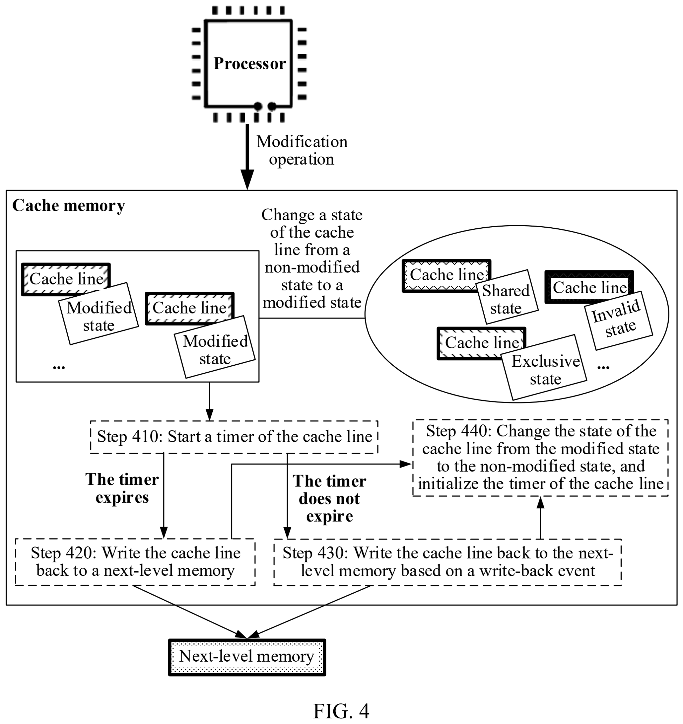

Next, the following describes in detail the data processing method provided in this application with reference to the accompanying drawings. FIG. 4 is a schematic flowchart of a data processing method according to this application. As shown in FIG. 4, the method includes the following steps.

**Step 410: Based on a state of a cache line in a memory changing from a non-modified state to a modified state, start a timer of the cache line.**

When a processor performs a modification operation on the cache line based on a write-back policy, the state of the cache line changes from the non-modified state to the modified state, the timer of the cache line is started, and the timer starts timing for the cache line in the modified state in a cache.

The non-modified state includes an exclusive state, a shared state, an invalid state, a forwarding state, and a special modified state. The state of the cache line may change from any one of states included in the non-modified state to the modified state. For example, the state of the cache line may change from the exclusive state to the modified state. For another example, the state of the cache line may change from the shared state to the modified state.

In some embodiments, a management unit in the cache scans the state of the cache line in the cache based on a timing unit. If the management unit determines that the state of the cache line is the modified state and the timer of the cache line is not started, this indicates that the state of the cache line changes from the non-modified state to the modified state. In this case, the timer of the cache line is started. If the management unit determines that the state of the cache line is the modified state and the timer of the cache line is started, this indicates that the state of the cache line changes from the modified state to a modified state. In this case, a count value of the timer of the cache line is updated.

The timing unit may be pre-configured. The timing unit indicates a periodicity of updating the count value of the timer of the cache line. The timing unit may be a minute (cycle), a second (second, S), a millisecond (millisecond, ms), a microsecond (microsecond, µs), or the like. For example, the timing unit is 1 millisecond. If a clock frequency of the cache is 3.0 GHz, the timing unit may be 1×3×10⁶ clocks, and each time 1×3×10⁶ clocks elapses, the state of the cache line is scanned.

A counting manner of the timer is not limited in this application. For example, the timer performs counting in a form of duration. A time unit may be a second, a millisecond, or a microsecond. For example, the timer performs counting in 7 milliseconds, and the count value of the timer is any one of 0 milliseconds to 6 milliseconds. For another example, the timer performs counting by using N bits. N is an integer greater than or equal to 1. The timer counts values of the N bits. The count value of the timer is any one of 2^{N}-1.

It may be understood that, the timing unit and the count value of the timer determine a timing target of the timer. The timing target of the timer may be pre-configured. The timing target of the timer is duration of a change process of the count value of the timer. For example, the timing unit is 1 millisecond, the count value of the timer may be seven numerical values, and the timing target of the timer is 7 milliseconds.

Assuming that N=3, the count value of the timer includes seven numerical values. For example, an initial value of the timer is 000, and after the timer of the cache line is started, the count value of the timer is 000. Each time one timing unit elapses, the state of the cache line is still the modified state, and the count value of the timer is increased by 1. In this case, the change process of the count value of the timer is 000->001->010->100->101->110->111. When the count value of the timer changes to 111, this indicates that the timer expires. In this case, the state of the cache line is still the modified state.

For another example, an initial value of the timer is 111, and after the timer of the cache line is started, the count value of the timer is 111. Each time one timing unit elapses, the state of the cache line is still the modified state, and the count value of the timer is decreased by 1. In this case, the change process of the count value of the timer is 111->110->101->100->010->001->000. When the count value of the timer changes to 000, this indicates that the timer expires.

It should be noted that, if the state of the cache line is the non-modified state (for example, any one of the exclusive state, the shared state, and the invalid state), in other words, if the state of the cache line is not the modified state, counting does not need to be performed for the cache line, and the count value of the timer of the cache line is 0.

In addition, a storage position of the timing unit and a storage position of the count value of the timer are not limited in this application. The timing unit may be stored in a register or another public storage area in the cache.

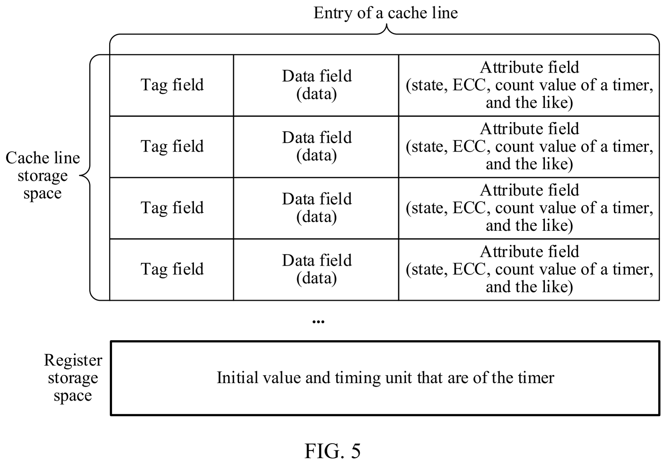

The count value of the timer is set in an entry of the cache line. The entry of the cache line includes a tag (tag) field, a data (data) field, and an attribute (attribute) field. The data field includes data. The tag field includes a physical address of the data, for example, a physical address of a prime memory when the data is stored in the prime memory. The attribute field includes the state of the cache line, an error correcting code (error correcting code, ECC), a storage position of the data, and the count value of the timer. That is, the count value of the timer is newly added to the attribute field in the entry of the cache line. For example, as shown in FIG. 5, an entry of each cache line in the cache includes a count value of a timer of the cache line. The cache further provides a unified software and hardware interface, and the unified software and hardware interface is configured to set the initial value and the timing unit that are of the timer.

The storage position of the count value of the timer is not limited in this application. Optionally, count values of timers of a plurality of cache lines are centrally stored in a section of storage space of the memory.

After the timer of the cache line is started, the state of the cache line and a storage manner of data of the cache line are determined based on the count value of the timer of the cache line or a write-back event. Details are described in the following step.

**Step 420: When the timer of the cache line expires, write the cache line back to a next-level memory.**

After the timer of the cache line is started, the state of the cache line is scanned based on the timing unit. If the state of the cache line is still the modified state, this indicates that the state of the cache line changes from the modified state to a modified state. In this case, the count value of the timer of the cache line is updated, and when the timer of the cache line expires, the cache line is written back to the next-level memory, that is, the data in the data field in the cache line is written back to the next-level memory.

For example, a cache in which the cache line is located is a level-1 cache. When the timer of the cache line expires, the cache line is written back to a level-2 cache. For another example, a cache in which the cache line is located is a level-2 cache. When the timer of the cache line expires, the cache line is written back to a level-3 cache. For another example, a cache in which the cache line is located is a level-3 cache. When the timer of the cache line expires, the cache line is written back to the prime memory. It may be understood that, in the method provided in this application, the data is written back level by level based on the timer of the cache line. To be specific, any memory in a computer device may write, when a timer of a cache line expires, the cache line back to a next-level memory according to the method provided in this application. Each memory writes back the data level by level based on the timer of the cache line, to implement write-back of the data level by level. In comparison with an existing memory, a storage capacity of the next-level memory is larger, and a large amount of redundant data can be stored. In this case, more error correcting codes indicate a stronger error correction capability and a stronger recovery capability.

A mapping manner of the cache may include direct mapping, set-associative mapping, and fully-associative mapping. The direct mapping means that a memory block in the prime memory can be mapped to only a specific cache line in the cache. The fully-associative mapping means that any one of memory blocks in the prime memory can be mapped to any one of cache lines in the cache. The set-associative mapping is a compromise solution between the direct mapping and the fully-associative mapping. The set-associative mapping means that both the prime memory and the cache are divided into groups, the direct mapping is used between the groups, and the fully-associative mapping is used within the group.

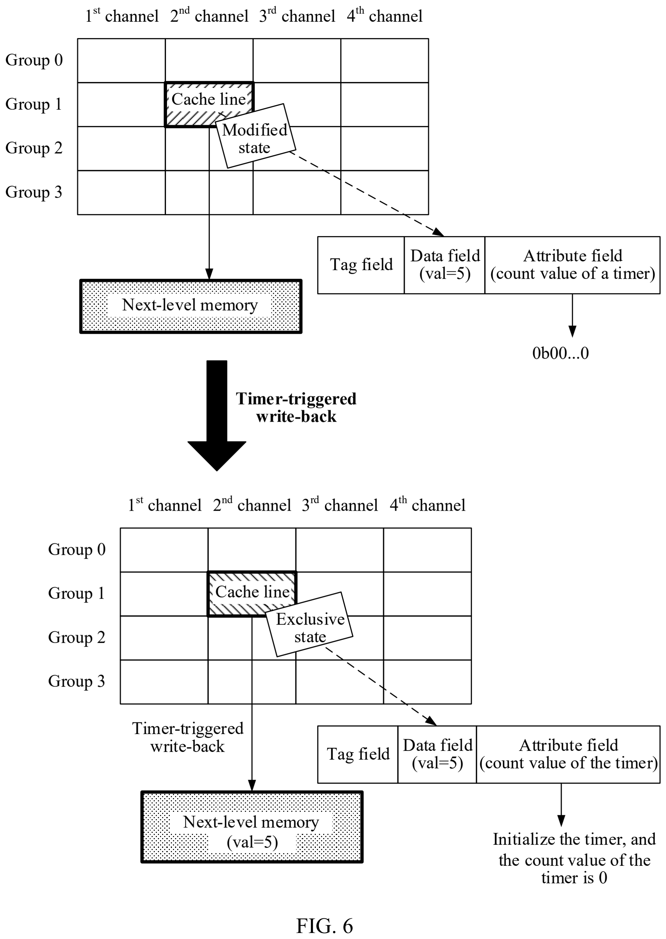

For example, as shown in FIG. 6, the cache is divided into 3 groups, and each group has 4 channels, that is, the cache includes 16 cache lines. The timer triggers write-back of the cache line to the next-level memory. A numerical value 5 of a cache line on a 2^{nd} channel of a group 1 is coherent with a numerical value 5 in the next-level memory, and the numerical value 5 is stored in only one cache line. In this case, a state of the cache line changes from the modified state to the exclusive state, and a timer of the cache line is initialized, that is, a count value of the timer is set to 0.

In this way, because the cache line in the modified state is monitored based on the timer of the cache line, the cache line does not remain in the modified state for a long time. When the timer of the cache line expires, the cache line is written back to the next-level memory. Because a plurality of copies of the data of the cache line are backed up in a system, this avoids a phenomenon that the data is unavailable because bitflip occurs when the memory stores only one piece of the data of the cache line. This effectively alleviates a risk, of data failure of the cache line in the modified state, caused by the bitflip, so that reliability of the cache line in the modified state is improved.

**Step 430: When the timer of the cache line does not expire, write the cache line back to the next-level memory based on the write-back event.**

After the timer of the cache line is started, the state of the cache line is scanned based on the timing unit. If the state of the cache line is still the modified state, this indicates that the state of the cache line changes from the modified state to the modified state. In this case, the count value of the timer of the cache line is updated. When the timer of the cache line does not expire, the cache changes the state of the cache line from the modified state to the non-modified state based on the write-back event indicated by the processor. For example, the write-back event includes an eviction operation on the cache line. The eviction operation indicates to evict the data of the cache line to the next-level memory, and the state of the cache line changes from the modified state to the invalid state.

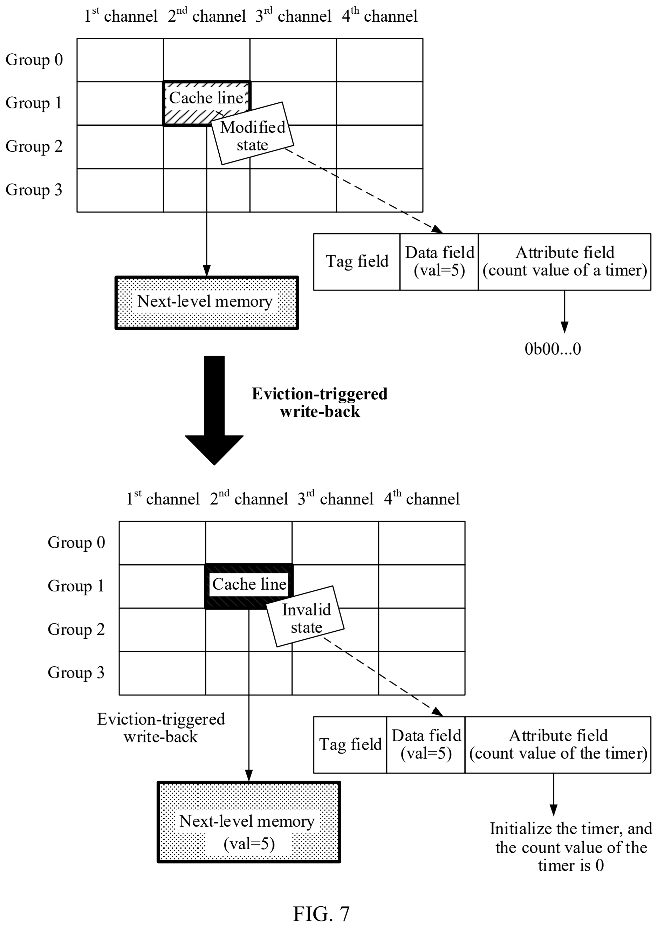

For example, as shown in FIG. 7, eviction triggers the write-back of the cache line to the next-level memory. A numerical value 5 of a cache line on a 2^{nd} channel of a group 1 is evicted to the next-level memory, and the numerical value 5 of the cache line is invalid. Therefore, a state of the cache line changes from the modified state to the invalid state, and a timer of the cache line is initialized.

In this way, because the cache line in the modified state is monitored based on the timer of the cache line, the cache line does not remain in the modified state for a long time. When the timer of the cache line does not expire, the cache line is written back to the next-level memory based on the eviction-triggered write-back. This effectively alleviates the risk of data failure of the cache line in the modified state, so that the reliability of the cache line in the modified state is improved.

In another example, when the timer of the cache line does not expire, the modification operation is performed on the cache line, the state of the cache line changes from the modified state to the shared state or the exclusive state, and the timer of the cache line is initialized. Because a plurality of copies of the data of the cache line are backed up in a system, this avoids a phenomenon that the data is unavailable because bitflip occurs when the memory stores only one piece of the data of the cache line. In this way, the cache line in the memory does not remain in the modified state for the long time. This effectively alleviates the risk of data failure of the cache line in the modified state, so that the reliability of the cache line in the modified state is improved.

After the cache line is written back to the next-level memory, **step 440 is performed: The state of the cache line changes from the modified state to the non-modified state, and the timer of the cache line is initialized.** For example, the count value of the timer is set to 0.

If the timing target of the timer is long, the cache line in the cache may remain in the modified state for a long time. In this case, a probability of the bitflip is high. If the timing target of the timer is short, the cache line in the cache may remain in the modified state for a short time. In this case, a probability of the bitflip is low. However, the data of the cache line needs to be frequently written back to the next-level memory. Therefore, the timing target of the timer may be properly set based on a service requirement or expert experience, to ensure that the reliability of the cache line in the modified state is improved, and reduce a quantity of times that the data of the cache line is written back to the next-level memory.

The following describes data processing of the cache line in the modified state by using an example in which the timer triggers the write-back of the cache line to the next-level memory. It is assumed that the timing target of the timer is 7 milliseconds, which may also be understood as that when N=3, the count value of the timer includes seven numerical values. The timing unit is 1 millisecond, and each time 1 millisecond elapses, the entry of the cache line in the cache is scanned. If the clock frequency of the cache is 3.0 GHz, that is, each time 1×3×10⁶ clocks elapses, the entry of the cache line in the cache is scanned. For the cache line that changes from the non-modified state to the modified state, the timer of the cache line is started. For the timer that is of the cache line and that is started and the cache line that changes from the modified state to the modified state, the count value of the timer of the cache line is decreased by 1.

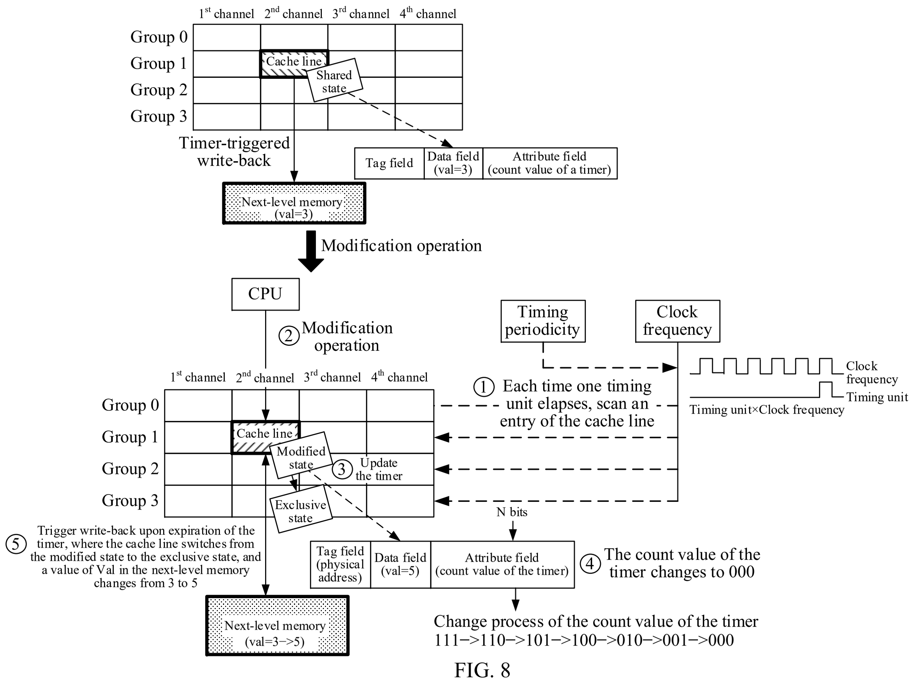

For example, as shown in FIG. 8, ① each time one timing unit (for example, 1 millisecond) elapses, the entry of the cache line in the cache is scanned. ② When a state of the cache line on the 2^{nd} channel of the group 1 is the shared state, a CPU performs the modification operation on the cache line on the 2^{nd} channel of the group 1, for example, rewrites a numerical value 3 to the numerical value 5, the state of the cache line changes from the shared state to the modified state, the timer of the cache line is started, and the count value of the timer is 111. ③ The timer is updated, that is, each time 1 ms elapses, the state of the cache line is still the modified state, and the count value of the timer is decreased by 1. After 7 ms, the state of the cache line is still the modified state. ④ The count value of the timer changes to 000, and the timer expires. ⑤ Write-back upon expiration of the timer is triggered, and the numerical value 5 of the cache line is written back to the next-level memory. The change process of the count value of the timer is 111->110->101->100->010->001->000.

After the timer triggers the write-back of the cache line to the next-level memory, because the numerical value 5 of the cache line is coherent with the numerical value 5 in the next-level memory, the state of the cache line changes from the modified state to the exclusive state, and the timer of the cache line is initialized, that is, the count value of the timer is set to 0.

It may be understood that, to implement functions in the foregoing embodiments, the memory includes a corresponding hardware structure and/or a corresponding software module for performing the functions. A person skilled in the art should easily be aware that, in this application, units and method steps described in examples with reference to embodiments disclosed in this application can be implemented in a form of hardware or a combination of hardware and computer software. Whether a specific function is performed by hardware or hardware driven by computer software depends on particular application scenarios and design constraints of the technical solutions.

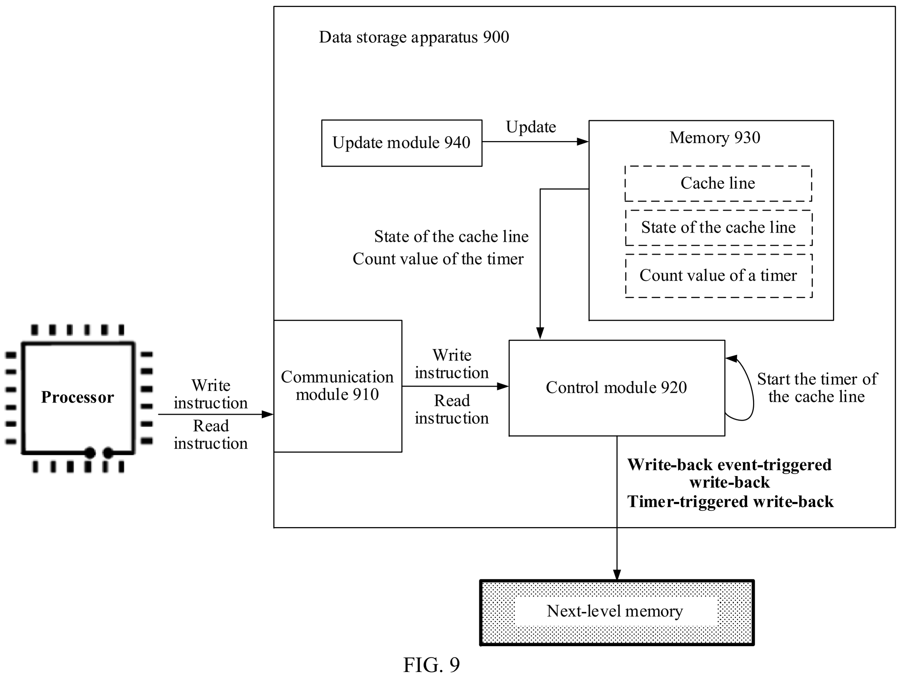

The foregoing describes in detail the data processing method according to embodiments with reference to FIG. 1 to FIG. 8. The following describes a data storage apparatus according to embodiments with reference to FIG. 9.

FIG. 9 is a diagram of a structure of a possible data storage apparatus according to this application. These data storage apparatuses may be configured to implement functions of the memory in the foregoing method embodiments, and therefore can also achieve beneficial effects of the foregoing method embodiments. In this embodiment, the data storage apparatus may be the cache shown in FIG. 4, or may be a module (for example, a chip) used in a server.

As shown in FIG. 9, the data storage apparatus 900 includes a communication module 910, a control module 920, and a memory 930. The data storage apparatus 900 is configured to implement functions of the cache in the method embodiment shown in FIG. 4.

The communication module 910 is configured to receive a write instruction or a read instruction, to perform a modification operation on a cache line in the memory.

The control module 920 is configured to: start, based on a state of the cache line in the memory changing from a non-modified state to a modified state, a timer of the cache line; and write the cache line back to a next-level memory when the timer of the cache line expires. For example, the control module 920 is configured to perform step 410 and step 420 in FIG. 4.

Optionally, the control module 920 is further configured to: when the timer of the cache line does not expire, write the cache line back to the next-level memory based on a write-back event. For example, the control module 920 is configured to perform step 430 in FIG. 4. For example, the write-back event includes an eviction operation on the cache line.

Optionally, the control module 920 is further configured to: change the state of the cache line from the modified state to the non-modified state, and initialize the timer of the cache line.

The memory 930 is configured to: store the cache line, the state of the cache line, and a count value of the timer of the cache line, so that the control module 920 determines the state of the cache line and a storage manner of data of the cache line based on the count value of the timer of the cache line. The memory 930 may include a cache and a register. The cache is configured to store the cache line, and the register is configured to store the state of the cache line and the count value of the timer of the cache line.

The data storage apparatus 900 further includes an update module 940, and the update module 940 is configured to update the state of the cache line and the count value of the timer of the cache line that are stored in the memory 930.

It should be understood that, the data storage apparatus 900 in this embodiment of this application may be implemented by using an application-specific integrated circuit (application-specific integrated circuit, ASIC) or a programmable logic device (programmable logic device, PLD). The PLD may be a complex programmable logic device (complex programmable logic device, CPLD), a field-programmable gate array (field-programmable gate array, FPGA), generic array logic (generic array logic, GAL), or any combination thereof. Alternatively, when the data processing method shown in FIG. 4 may be implemented by using software, modules of the data processing method may alternatively be software modules. Modules of the data storage apparatus 900 may alternatively be software modules.

The data storage apparatus 900 according to this embodiment of this application may correspondingly perform the method described in embodiments of this application. In addition, the foregoing operations and other operations and/or functions of units in the data storage apparatus 900 are respectively for implementing corresponding procedures of methods in FIG. 4. For brevity, details are not described herein again.

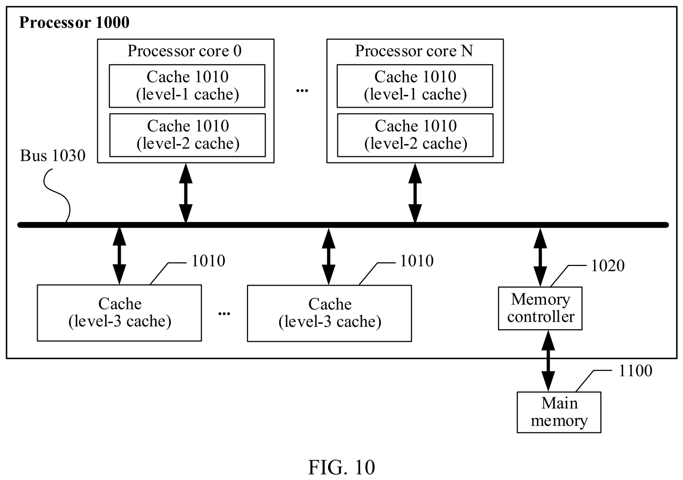

FIG. 10 is a diagram of a structure of a processor 1000 according to this application. As shown in FIG. 10, the processor 1000 includes one processor core (core) or a plurality of processor cores. For example, the processor 1000 shown in FIG. 10 includes N processor cores. The processor 1000 may be a CPU. The processor 1000 further includes a cache 1010.

The cache 1010 is configured to store instructions or data that may be accessed by the processor core in the processor 1000 a plurality of times. In this way, a data processing speed of the processor is increased, and this avoids frequent access of a main memory 1100 by the processor.

In a physical form, the cache 1010 may be a random access memory (random access memory, RAM), a static random access memory (static random access memory, SRAM), a dynamic random access memory (dynamic RAM, DRAM), or another type of storage device that can store information and instructions.

In a logical form, the cache 1010 may be a level-1 cache (L1 cache), a level-2 cache (L2 cache), a level-3 cache (L3 cache), or a cache device of any level. For example, as shown in FIG. 10, a cache 1010 arranged inside the processor core may be the level-1 cache (L1 cache) and the level-2 cache (L2 cache). A cache 1010 arranged outside the processor core may be the level-3 cache (L3 cache).

When the cache 1010 is configured to implement functions of the cache shown in FIG. 4, when a state of a cache line in the cache 1010 changes from a non-modified state to a modified state, a timer of the cache line is started; and the cache line is written back to a next-level memory when the timer of the cache line expires. Because the cache line in the modified state is monitored based on a timing mechanism, the cache line in the cache does not remain in the modified state for a long time. When the timer of the cache line expires, the cache line is written back to the next-level memory, and data of the cache line is backed up. This effectively alleviates a risk, of data failure of the cache line in the modified state, caused by bitflip, so that reliability of the cache line in the modified state is improved.

The processor 1000 is connected to the main memory 1100 via a memory controller (memory controller, MC) 1020. The processor 1000 may perform various functions of a computer device by running or executing a software program stored in the main memory 1100, and invoking data stored in the main memory 1100. For example, the processor 1000 writes the data of the cache line back to the main memory 1100 via the memory controller 1020.

A bus 1030 may include a path for transmitting information between the foregoing components (for example, the cache 1010 and the memory controller 1020). In addition to a data bus, the bus 1030 may further include a power bus, a control bus, a status signal bus, and the like. However, for clear description, various types of buses are marked as the bus 1030 in the figure. The bus 1030 may be a peripheral component interconnect express (Peripheral Component Interconnect Express, PCIe) bus, an extended industry standard architecture (extended industry standard architecture, EISA) bus, a computer express link (compute express link, CXL), a cache coherent interconnect for accelerators (cache coherent interconnect for accelerators, CCIX), or the like. The bus 1030 may be divided into an address bus, a data bus, a control bus, and the like.

It should be noted that in FIG. 10, that the processor 1000 includes N caches 1010 is merely used as an example. Herein, the caches 1010 respectively indicate a type of components or devices. In a specific embodiment, a quantity of components or devices of each type may be determined based on a service requirement.

The cache 1010 may correspond to the cache in the foregoing method embodiment, and is configured to store the state of the cache line and a count value of the timer of the cache line. The cache 1010 may be a volatile memory pool or a non-volatile memory pool, or may include both a volatile memory and a non-volatile memory. The non-volatile memory may be a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), or a flash memory. The volatile memory may be a random access memory (random access memory, RAM), and is used as an external cache. Through example but not limitative descriptions, many forms of RAMs may be used, such as a static random access memory (static RAM, SRAM), a dynamic random access memory (DRAM), a synchronous dynamic random access memory (synchronous DRAM, SDRAM), a double data rate synchronous dynamic random access memory (double data rate SDRAM, DDR SDRAM), an enhanced synchronous dynamic random access memory (enhanced SDRAM, ESDRAM), a synchlink dynamic random access memory (synchlink DRAM, SLDRAM), and a direct rambus random access memory (direct rambus RAM, DR RAM).

The cache 1010 may correspond to a storage medium that is configured to store information such as computer instructions, the state of the cache line, and the count value of the timer of the cache line and that is in the foregoing method embodiment.

It should be understood that, the cache 1010 according to this embodiment may correspond to the data storage apparatus 900 in embodiments, and may correspond to a corresponding body performing any one of methods in FIG. 4. In addition, the foregoing operations and other operations and/or functions of modules in the data storage apparatus 900 are respectively for implementing corresponding procedures of the methods in FIG. 4. For brevity, details are not described herein again.

Method steps in embodiments may be implemented in a hardware manner, or may be implemented by a processor by executing software instructions. The software instructions may be formed by corresponding software modules. The software module may be stored in a random access memory (random access memory, RAM), a flash memory, a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), a register, a hard disk, a removable hard disk, a CD-ROM, or any other form of storage medium well-known in the art. For example, a storage medium is coupled to a processor, so that the processor can read information from the storage medium and write information into the storage medium. Certainly, the storage medium may alternatively be a component of the processor. The processor and the storage medium may be located in an ASIC. In addition, the ASIC may be located in a computing device. Certainly, the processor and the storage medium may alternatively exist in a computing device as discrete components.

All or a part of the foregoing embodiments may be implemented by using software, hardware, firmware, or any combination thereof. When software is used for implementing embodiments, all or a part of embodiments may be implemented in a form of a computer program product. The computer program product includes one or more computer programs or instructions. When the computer programs or the instructions are loaded and executed on a computer, all or a part of procedures or functions in embodiments of this application are performed. The computer may be a general-purpose computer, a dedicated computer, a computer network, a network device, user equipment, or another programmable apparatus. The computer programs or instructions may be stored in a computer-readable storage medium, or may be transmitted from a computer-readable storage medium to another computer-readable storage medium. For example, the computer programs or the instructions may be transmitted from a website, a computer, a server, or a data center to another website, computer, server, or data center in a wired or wireless manner. The computer-readable storage medium may be any usable medium that can be accessed by a computer, or a data storage device, such as a server or a data center, integrating one or more usable media. The usable medium may be a magnetic medium, such as a floppy disk, a hard disk, or a magnetic tape; or may be an optical medium, for example, a digital video disc (digital video disc, DVD); or may be a semiconductor medium, for example, a solid state drive (solid state drive, SSD). The foregoing descriptions are merely specific implementations of this application, but the protection scope of this application is not limited thereto. Any modification or replacement readily figured out by a person skilled in the art within the technical scope disclosed in this application shall fall within the protection scope of this application. Therefore, the protection scope of this application shall be subject to the protection scope of the claims.

## Claims

1. A data processing method, comprising:
based on a state of a cache line in a memory changing from a non-modified state to a modified state, starting a timer of the cache line; and
writing the cache line back to a next-level memory when the timer of the cache line expires.

2. The method according to claim 1, wherein after starting the timer of the cache line, the method further comprises:
when the timer of the cache line does not expire, writing the cache line back to the next-level memory based on a write-back event.

3. The method according to claim 2, wherein the write-back event comprises an eviction operation on the cache line.

4. The method according to any one of claims 1 to 3, wherein after writing the cache line back to the next-level memory, the method further comprises:
changing the state of the cache line from the modified state to the non-modified state, and initializing the timer of the cache line.

5. The method according to any one of claims 1 to 4, wherein based on the state of the cache line in the memory changing from the non-modified state to the modified state, starting the timer of the cache line comprises:
performing a modification operation on the cache line, wherein the state of the cache line changes from the non-modified state to the modified state, and starting the timer of the cache line.

6. The method according to any one of claims 1 to 5, wherein an entry of the cache line comprises a tag, data, and an attribute, the tag comprises a physical address of the data, and the attribute comprises a count value of the timer of the cache line.

7. The method according to any one of claims 1 to 6, wherein the memory is configured to store timing units of timers of a plurality of cache lines in the memory, and the timing unit indicates a periodicity of updating the count value of the timer of the cache line.

8. A data storage apparatus, comprising:
a memory, configured to store a cache line; and
a control module, configured to: start, based on a state of the cache line in the memory changing from a non-modified state to a modified state, a timer of the cache line, wherein
the control module is further configured to: write the cache line back to a next-level memory when the timer of the cache line expires.

9. The apparatus according to claim 8, wherein the control module is further configured to:
when the timer of the cache line does not expire, write the cache line back to the next-level memory based on a write-back event.

10. The apparatus according to claim 9, wherein the write-back event comprises an eviction operation on the cache line.

11. The apparatus according to any one of claims 8 to 10, wherein the control module is further configured to:
change the state of the cache line from the modified state to the non-modified state, and initialize the timer of the cache line.

12. The apparatus according to any one of claims 8 to 11, wherein an entry of the cache line comprises a tag, data, and an attribute, the tag comprises a physical address of the data, and the attribute comprises a count value of the timer of the cache line.

13. A chip, comprising a processor and a power supply circuit, wherein the power supply circuit is configured to supply power to the processor; and the processor is configured to implement the method according to any one of claims 1 to 7.

14. A computer device, wherein the computer device comprises a processor and a multi-level memory; and when the memory executes a group of computer instructions, the method according to any one of claims 1 to 7 is implemented.
